# FASCICULE DE BREVET EUROPEEN

(11) **EP 3 022 685 B1**
(45) Date de publication et mention de la délivrance du brevet: **28.11.2018**
(21) Numéro de dépôt: 15738646.7
(22) Date de dépôt: 16.07.2015
(51) Int. Cl.: G06K 9/00, G06K 9/03

(54) **PROCEDE D'IDENTIFICATION RAPIDE D'UN OBJET BIOMETRIQUE DURANT LA PHASE D'ACQUISITION ET DISPOSITIF D'IDENTIFICATION POUR LA MISE EN OEUVRE DE CE PROCEDE**
VERFAHREN ZUR SCHNELLEN IDENTIFIKATION EINES BIOMETRISCHEN OBJEKTS WÄHREND DER ERFASSUNGSPHASE UND IDENTIFIKATIONSVORRICHTUNG ZUR IMPLEMENTIERUNG DIESES VERFAHRENS
METHOD OF RAPID IDENTIFICATION OF A BIOMETRIC OBJECT DURING THE ACQUISITION PHASE AND IDENTIFICATION DEVICE FOR THE IMPLEMENTATION OF THIS METHOD

(30) Priorité: 18.07.2014 FR 1456958
(43) Date de publication de la demande: 25.05.2016
(73) Titulaire: Morpho, 92130 Issy-les-Moulineaux (FR)
(72) Inventeur: KAZDAGHLI, Laurent, F-92130 Issy-les-moulineaux (FR); DARBOIS, Matthieu, F-92130 Issy-les-moulineaux (FR); THUILLIER, Cédric, F-92130 Issy-les-moulineaux (FR)
(74) Mandataire: Lavialle, Bruno François Stéphane
(86) Numéro de dépôt international: PCT/EP2015/066342
(87) Numéro de publication internationale: WO 2016/009007

(56) Documents cités:
- EP-A2- 1 965 331
- EP-A2- 2 161 675
- EP-A2- 2 750 076
- US-A1- 2009 226 048
- KIEN NGUYEN ET AL: "Quality-Driven Super-Resolution for Less Constrained Iris Recognition at a Distance and on the Move", IEEE TRANSACTIONS ON INFORMATION FORENSICS AND SECURITY, IEEE, PISCATAWAY, NJ, US, vol. 6, no. 4, 1 décembre 2011 (2011-12-01), pages 1248-1258, XP011371305, ISSN: 1556-6013, DOI: 10.1109/TIFS.2011.2159597
- RUGGERO DONIDA LABATI ET AL: "Neural-based quality measurement of fingerprint images in contactless biometric systems", NEURAL NETWORKS (IJCNN), THE 2010 INTERNATIONAL JOINT CONFERENCE ON, IEEE, PISCATAWAY, NJ, USA, 18 juillet 2010 (2010-07-18), pages 1-8, XP031771647, ISBN: 978-1-4244-6916-1

## Description

La présente invention concerne l'identification d'un objet, le terme objet étant à prendre au sens large et englobant en particulier les objets biométriques que sont les empreintes digitales, les motifs de l'iris de l'oeil, les visages...

Dans le domaine de la biométrie, il est connu des procédés d'identification optique d'empreintes mis en oeuvre au moyen d'une unité informatique de traitement reliée à un organe de capture et à une mémoire hébergeant des caractéristiques d'empreintes mémorisées en association avec des identifiants des empreintes (ou de leurs porteurs). Un tel procédé comprend une phase de capture d'une image d'une empreinte puis une phase finale d'identification. La phase finale d'identification comprend l'étape d'extraire de l'image des caractéristiques de l'empreinte, l'étape de comparer les caractéristiques extraites avec les caractéristiques mémorisées. L'empreinte est identifiée lorsque les caractéristiques extraites et les caractéristiques mémorisées en association avec l'un des identifiants correspondent entre elles avec un taux de correspondance prédéterminé. Un tel procédé d'identification est connu par exemple de US2009/0226048A1.

Un inconvénient de ces procédés d'identification est qu'ils sont relativement longs globalement, notamment la phase de capture afin de garantir la qualité de l'empreinte.

Afin de garantir la qualité de l'image unique utilisée lors de la phase finale d'identification, la phase de capture consiste à acquérir et analyser une série d'images successives, l'analyse permettant la sélection de l'image unique qui sera utilisée lors de la phase finale d'identification.

Il existe des procédés de capture non optique qui consistent comme précédemment à acquérir et analyser une série d'images successives (image est à considérer au sens large comme un ensemble de caractéristiques capturées sur un objet, quelle que soit la nature de ces caractéristiques), puis à sélectionner la meilleure image.

Un but de l'invention est de fournir un moyen pour diminuer le temps nécessaire à l'ensemble du processus : capture et identification. Un procédé d'identification d'objet selon l'invention est décrit dans la revendication 1. Un dispositif d'identification selon l'invention est décrit dans la revendication 9.

A cet effet, on prévoit, selon l'invention, un procédé d'identification d'objet mis en oeuvre au moyen d'une unité informatique de traitement reliée à un organe de capture et à une mémoire hébergeant des caractéristiques d'objets mémorisées en association avec des identifiants d'objets. Le procédé comprend une phase de capture d'une série d'images successives d'un objet et une phase finale d'identification. Le procédé comporte au moins une étape de sélectionner au moins une image représentant l'objet pendant la capture de la série d'images. La phase finale d'identification comprend l'étape d'extraire de l'image sélectionnée des caractéristiques de l'objet, l'étape de comparer les caractéristiques extraites avec les caractéristiques mémorisées, l'objet étant identifié lorsque les caractéristiques extraites et les caractéristiques mémorisées en association avec l'un des identifiants correspondent entre elles avec un taux de correspondance prédéterminé. Le procédé comprend en outre une phase intermédiaire d'identification comprenant : l'étape de sélectionner au moins une image représentant l'objet pendant la capture de la série d'images, l'étape d'extraire de l'image sélectionnée des caractéristiques de l'objet, l'étape de comparer les caractéristiques extraites avec les caractéristiques mémorisées, l'objet étant identifié lorsque les caractéristiques extraites et les caractéristiques mémorisées en association avec l'un des identifiants correspondent entre elles à un taux de correspondance prédéterminé, la phase finale d'identification n'étant alors pas réalisée.

Ainsi, on commence une phase d'identification sans attendre la fin de l'opération de capture.

De préférence, le taux de correspondance prédéterminé de la phase intermédiaire d'identification est plus restrictif que le taux de correspondance de la phase finale d'identification.

Comme on ne dispose pas de toutes les images disponibles, il existe un risque que toutes les caractéristiques puissent ne pas être extraites avec une qualité optimale. Pour ne pas augmenter les cas d'identification incorrecte du procédé, il est prévu d'utiliser dans la phase intermédiaire d'identification un taux de correspondance plus restrictif que le taux de correspondance utilisé lors de la phase finale d'identification (par plus restrictif, on entend que le nombre de caractéristiques capturées qui doivent être identiques aux caractéristiques mémorisées pour considérer que l'identification est réussie sera plus élevé dans la phase intermédiaire d'identification que dans la phase finale d'identification).

De préférence, la phase intermédiaire d'identification comporte(nt) l'étape de sélectionner l'objet dans des images, cette étape de sélectionner l'objet dans les images comprend une opération de suivi d'une forme d'objet présumé d'une image à l'autre et une opération de comparaison à une forme de référence de la forme d'objet présumé repérée sur chaque image, l'objet est sélectionné lorsque la comparaison est positive..

Il est alors possible de détecter rapidement une image dans laquelle l'objet est suffisamment défini pour permettre une identification.

Avantageusement alors, si la comparaison aux caractéristiques mémorisées échoue un nombre prédéterminé de fois, le suivi de la forme d'objet présumé dans la série d'images est abandonné.

Cette comparaison mobilise des ressources de calcul. Il est donc prépondérant de limiter l'emploi de ces ressources si l'on considère que les chances sont faibles de détecter l'objet avec une qualité suffisante pour permettre le succès de la phase intermédiaire d'identification. Dans ce cas, la phase intermédiaire d'identification n'est pas conduite à son terme pour cet objet, mais reste valable pour les autres objets suivis lors de la phase de capture. Lorsqu'aucun des objets passés par la phase d'identification intermédiaire n'a été validé, la phase finale d'identification est maintenue.

L'invention a également pour objet un dispositif d'identification agencé pour la mise en oeuvre de ce procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :

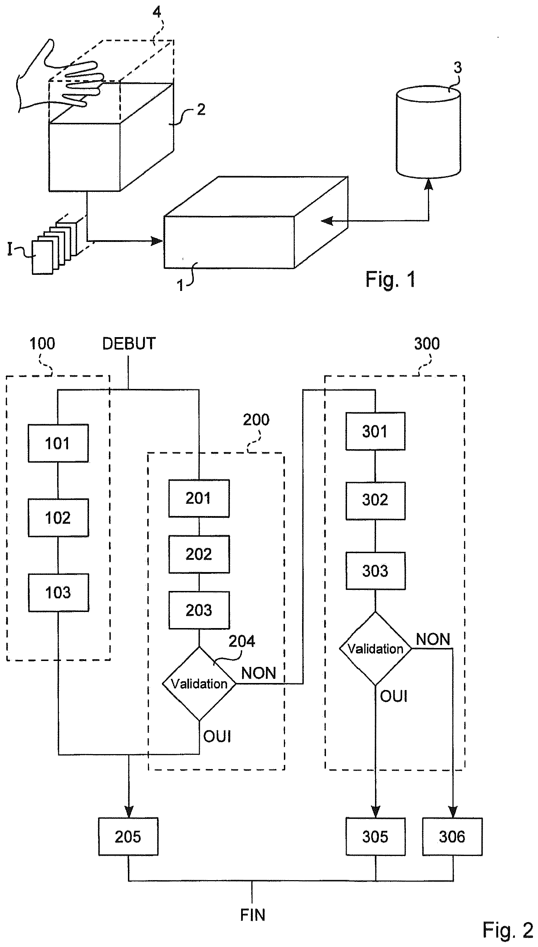

- la figure 1 est une vue schématique d'un dispositif d'identification agencé pour la mise en oeuvre du procédé de l'invention ;
- la figure 2 est un bloc diagramme illustrant le déroulement du procédé de l'invention.

L'invention est ici décrite en application à l'identification d'individus à partir de leurs empreintes digitales.

En référence aux figures, le procédé d'identification objet de l'invention est mis en oeuvre au moyen d'un dispositif d'identification comprenant une unité informatique de traitement 1 reliée à un organe de capture 2 et à une mémoire 3 dans laquelle ont été enregistrées, lors d'une étape préalable d'enrôlement, des caractéristiques d'empreintes digitales en association avec des identifiants d'individus.

L'organe de capture 2 comprend ici une caméra en regard de laquelle est matérialisée une zone de capture 4 dans laquelle le candidat à l'identification est destiné à passer la main sans l'arrêter. Les propriétés de la caméra (champ et vitesse d'acquisition notamment) lui permettent de capturer plusieurs images de la main en mouvement. L'organe de capture 2 est en fonctionnement permanent pour détecter l'arrivée d'un objet dans la zone de capture (par exemple au moyen d'un capteur dédié comme une barrière infrarouge ou au moyen de la caméra), pour commencer à enregistrer des images I de la zone de capture 4 dès l'arrivée d'un objet dans la zone de capture 4 et pour transmettre ces images à l'unité de traitement 1 au fur et à mesure de leur capture.

L'unité de traitement 1 est par exemple un ordinateur agencé pour échanger des données avec l'organe de capture 2 et la mémoire 3, et pour exécuter un programme d'identification mettant en oeuvre un algorithme de traitement d'image et un algorithme d'identification. Le programme d'identification met par exemple en oeuvre au moins en partie l'enseignement du document WO-A-2009/112717.

L'algorithme de traitement d'image de la phase de capture est agencé pour pouvoir :
- suivre un objet d'une image à l'autre,
- si deux objets sont présents dans l'image, isoler les objets les uns des autres (par exemple par détourage),
- déterminer si l'objet est une empreinte digitale (en particulier au moyen d'un filtre directionnel) et a une qualité suffisante pour permettre une extraction de caractéristiques biométriques.

L'algorithme d'identification est agencé pour :
- extraire des caractéristiques biométriques de l'empreinte digitale,
- comparer les caractéristiques biométriques extraites aux caractéristiques biométriques mémorisées.

Le programme d'identification est agencé pour mettre en oeuvre un procédé d'identification comprenant une phase de capture 100 d'une série d'images I successives, une phase intermédiaire d'identification 200 puis éventuellement une phase finale d'identification 300.

La phase de capture 100 comprend les étapes de :
- détecter l'arrivée d'un objet dans la zone de capture 4 (étape 101),
- commencer à enregistrer des images I de la zone de capture 4 dès la détection de l'objet dans la zone de capture 4 et transmettre ces images I à l'unité de traitement 1 au fur et à mesure de leur capture (étape 102), préférentiellement lors de cette étape 102, à l'aide de moyens de sélection appartenant à l'organe de capture, on sélectionne dans la série d'images I au moins une image représentant l'empreinte digitale, cette sélection peut être réalisée via un algorithme de sélection agencé pour par exemple sélectionner la meilleure image de chaque empreinte digitale identifiée dans la série d'images I,
- cesser la capture au bout d'une durée prédéterminée maximale (par exemple trois secondes) ou d'un signal de fin de capture issu de l'analyse de ces images (étape 103).

La phase intermédiaire d'identification 200 débute après la réception par l'unité de traitement 1 de la première image capturée par l'organe de capture 2 et se poursuit en même temps que la phase de capture 100. Eventuellement, par exemple si la sélection d'au moins une image représentant au moins une empreinte digitale n'a pas déjà été réalisée à l'étape 102 de la phase de capture décrite précédemment, la phase intermédiaire d'identification 200 comprend l'étape 201 de sélectionner au moins une image représentant au moins une empreinte digitale pendant la capture de la série d'images I. La sélection est réalisée sur la base de la détection dans l'image d'une empreinte digitale. A cette fin, la sélection est précédée d'une opération de détection de l'empreinte digitale dans chaque image successive de la série. L'opération de détection comprend une opération de suivi d'une forme de l'empreinte digitale présumée d'une image à l'autre et une opération de comparaison à une forme de référence de la forme de l'empreinte digitale présumée repérée sur chaque image, la présence de l'empreinte digitale est détectée lorsque la comparaison est positive. La forme de référence est suffisamment détaillée pour que l'on soit assuré que l'image de l'empreinte digitale détectée dans l'image a une qualité suffisante pour pouvoir réaliser l'identification. Si la comparaison échoue un nombre prédéterminé de fois (par exemple trois fois), le suivi de la forme de l'empreinte digitale présumée est abandonné.

La phase intermédiaire d'identification 200 se poursuit par les étapes de :
- extraire de l'image sélectionnée des caractéristiques biométriques (étape 202),
- comparer les caractéristiques biométriques extraites avec les caractéristiques biométriques mémorisées (étape 203),
- valider l'identification (étape 204) lorsque les caractéristiques biométriques extraites et les caractéristiques biométriques mémorisées en association avec l'un des identifiants correspondent entre elles avec un taux de correspondance prédéterminé plus restrictif que le taux de correspondance de la phase finale d'identification 300.

Si l'identification est validée, la phase finale d'identification 300 n'est pas réalisée et la réussite de l'identification est signalée (étape 205). On notera qu'il est possible d'effectuer simultanément plusieurs identifications intermédiaires, chacune sur un des objets détectés dans les images (dans le cas par exemple ou plusieurs doigts apparaissent sur chaque image). Si aucune identification intermédiaire n'est validée avant la fin de la phase de capture, la phase finale d'identification 300 est lancée.

La phase finale d'identification comprend les étapes de :
- éventuellement, par exemple si la sélection n'a pas été déjà réalisée à l'étape précédente 102 de la phase de capture 100 via des moyens de sélection appartenant à l'organe de capture ou à l'étape 201, sélectionner dans la série d'images au moins une image représentant l'empreinte digitale (étape 301),
- extraire de l'image sélectionnée, à l'étape 102 ou éventuellement à l'étape 201 ou à l'étape 301, des caractéristiques biométriques de l'empreinte digitale (étape 302),
- comparer les caractéristiques biométriques extraites avec les caractéristiques biométriques mémorisées (étape 303),
- valider l'identification (étape 304) lorsque les caractéristiques biométriques extraites et les caractéristiques biométriques mémorisées en association avec l'un des identifiants correspondent entre elles avec un taux de correspondance prédéterminé (ici 95%) inférieur au taux de correspondance de la phase intermédiaire d'identification 200,

Si l'identification est validée, la réussite de l'identification est signalée (étape 305). Si l'identification n'est pas validée, l'échec de l'identification est signalé (étape 306).

Pour gagner du temps lors des phases d'identification, les caractéristiques mémorisées sont ordonnées selon la fréquence de validation des identifiants de telle manière que les caractéristiques mémorisées des identifiants les plus souvent validés soient les premières utilisées lors des identifications.

Bien entendu, l'invention n'est pas limitée aux modes de réalisation décrits mais englobe toute variante entrant dans le champ de l'invention telle que définie par les revendications.

En particulier, l'invention est applicable à d'autres objets et notamment d'autres objets biométriques comme les iris des yeux et les visages.

Bien qu'il soit avantageux que, pour être sélectionné pour l'identification intermédiaire, un objet suivi d'une image à l'autre doive être détecté sur un nombre prédéterminé d'images, on peut prévoir qu'une détection sur une seule image suffise.

Bien qu'il soit avantageux que la tentative d'identification intermédiaire de cet objet soit abandonnée si l'identification intermédiaire échoue un nombre prédéterminé de fois pour un objet suivi, on peut prévoir de persister dans ces tentatives.

## Revendications

1. Procédé d'identification d'objet mis en oeuvre au moyen d'une unité informatique de traitement reliée à un organe de capture et à une mémoire hébergeant des caractéristiques d'objets mémorisées en association avec des identifiants d'objets, le procédé comprenant une phase de capture d'une série d'images successives d'un objet et une phase finale d'identification lancée à la fin de ladite phase de capture; le procédé comportant au moins une étape de sélectionner au moins une image représentant l'objet pendant la capture de la série d'images, la phase finale d'identification comprenant l'étape d'extraire de l'image sélectionnée des caractéristiques de l'objet et l'étape de comparer les caractéristiques extraites avec les caractéristiques mémorisées, l'objet étant identifié lorsque les caractéristiques extraites et les caractéristiques mémorisées en association avec l'un des identifiants correspondent entre elles avec un premier taux de correspondance prédéterminé ; **caractérisé en ce que** le procédé comprend une phase intermédiaire d'identification qui débute après la réception par l'unité de traitement (1) de la première image capturée par l'organe de capture (2) et se poursuit en même temps que la phase de capture (100), cette phase intermédiaire d'identification comprenant : l'étape d'extraire de l'image sélectionnée des caractéristiques de l'objet, l'étape de comparer les caractéristiques extraites avec les caractéristiques mémorisées, l'objet étant identifié lorsque les caractéristiques extraites et les caractéristiques mémorisées en association avec l'un des identifiants correspondent entre elles à un deuxième taux de correspondance prédéterminé plus restrictif que le premier taux de correspondance, la phase finale d'identification n'étant alors pas réalisée.

2. Procédé selon la revendication 1, dans lequel la phase de capture ou la phase intermédiaire d'identification comporte l'étape de sélectionner l'objet dans des images, la sélection comprenant une opération de suivi d'une forme d'objet présumé d'une image à l'autre et une opération de comparaison à une forme de référence de la forme d'objet présumé repérée sur chaque image, l'objet est sélectionné lorsque la comparaison est positive.

3. Procédé selon la revendication 2, dans lequel un objet suivi d'une image à l'autre doit être détecté sur un nombre prédéterminé d'images afin d'être sélectionné pour l'identification intermédiaire.

4. Procédé selon l'une quelconque des revendications précédentes, dans lequel si l'identification intermédiaire échoue un nombre prédéterminé de fois pour un objet suivi, la tentative d'identification intermédiaire de cet objet est abandonnée.

5. Procédé selon l'une quelconque des revendications précédentes, dans lequel les caractéristiques mémorisées sont ordonnées selon la fréquence des identifiants validés par le processus.

6. Procédé selon la revendication 1, dans lequel l'objet est un élément biométrique tel qu'une empreinte digitale.

7. Procédé selon la revendication 1, dans lequel l'objet est un élément biométrique tel qu'un iris d'oeil.

8. Procédé selon la revendication 1, dans lequel l'objet est un élément biométrique tel qu'un visage.

9. Dispositif d'identification comprenant une unité informatique de traitement reliée à un organe de capture et à une mémoire hébergeant des caractéristiques d'objets mémorisées en association avec des identifiants d'objets, l'unité informatique de traitement étant programmée pour mettre en oeuvre le procédé selon l'une quelconque des revendications précédentes.

## Patentansprüche

1. Verfahren zur Objektidentifikation, das mit Hilfe einer Rechenverarbeitungseinheit umgesetzt wird, die mit einem Erfassungsorgan und mit einem Speicher verbunden ist, der Merkmale von Objekten aufnimmt, die in Verbindung mit Identifikatoren von Objekten gespeichert sind, wobei das Verfahren eine Erfassungsphase zum Erfassen einer Reihe von aufeinanderfolgenden Bildern eines Objektes und eine finale Identifikationsphase umfasst, die am Ende der genannten Erfassungsphase gestartet wird; wobei das Verfahren mindestens einen Schritt des Auswählens mindestens eines das Objekt darstellenden Bildes während der Erfassung der Reihe von Bildern umfasst, wobei die finale Identifikationsphase den Schritt des Extrahierens aus dem ausgewählten Bild von Merkmalen des Objekts und den Schritt des Vergleichens der extrahierten Merkmale mit den gespeicherten Merkmalen umfasst, wobei das Objekt identifiziert wird, wenn die extrahierten Merkmale und die in Verbindung mit einem der Identifikatoren gespeicherten Merkmale einander mit einer vorgegebenen ersten Übereinstimmungsrate entsprechen; **dadurch gekennzeichnet, dass** das Verfahren eine Zwischenidentifikationsphase umfasst, die nach dem Empfang des von dem Erfassungsorgan (2) erfassten ersten Bildes durch die Verarbeitungseinheit (1) beginnt und zeitgleich mit der Erfassungsphase (100) weitergeführt wird, wobei diese Zwischenidentifikationsphase umfasst: den Schritt des Extrahierens aus dem ausgewählten Bild von Merkmalen des Objektes, den Schritt des Vergleichens der extrahierten Merkmale mit den gespeicherten Merkmalen, wobei das Objekt identifiziert wird, wenn die extrahierten Merkmale und die in Verbindung mit einem der Identifikatoren gespeicherten Merkmale einander mit einer vorgegebenen zweiten Übereinstimmungsrate entsprechen, die restriktiver als die erste Übereinstimmungsrate ist, wobei die finale Identifikationsphase dann nicht realisiert wird.

2. Verfahren nach Anspruch 1, bei dem die Erfassungsphase oder die Zwischenidentifikationshase den Schritt des Auswählens des Objekts in den Bilden umfasst, wobei die Auswahl einen Vorgang des Verfolgens einer Form eines angenommenen Objekts von einem Bild zum anderen umfasst, sowie einen Vorgang des Vergleichens der Form des angenommenen Objekts, die in jedem Bild ermittelt wird, mit einer Referenzform, wobei das Objekt ausgewählt wird, wenn der Vergleich positiv ist.

3. Verfahren nach Anspruch 2, bei dem ein von einem Bild zum anderen verfolgtes Objekt auf einer vorgegebenen Anzahl von Bildern erfasst werden muss, um für die Zwischenidentifikation ausgewählt zu werden.

4. Verfahren nach einem der vorhergehenden Ansprüche, bei dem, wenn die Zwischenidentifikation eine vorgegebene Anzahl von Malen für ein verfolgtes Objekt misslingt, der Zwischenidentifikationsversuch für dieses Objekt aufgegeben wird.

5. Verfahren nach einem der vorhergehenden Ansprüche, bei dem die gespeicherten Merkmale nach der Häufigkeit der durch den Prozess validierten Identifikatoren geordnet sind.

6. Verfahren nach Anspruch 1, bei dem das Objekt ein biometrisches Element, wie z. B. ein Fingerabdruck, ist.

7. Verfahren nach Anspruch 1, bei dem das Objekt ein biometrisches Element, wie z. B. eine Iris, ist.

8. Verfahren nach Anspruch 1, bei dem das Objekt ein biometrisches Element, wie z. B. ein Gesicht, ist.

9. Vorrichtung zur Identifikation, umfassend eine Rechenverarbeitungseinheit, die mit einem Erfassungsorgan und mit einem Speicher verbunden ist, der Merkmale von in Verbindung mit Objektidentifikatoren gespeicherten Objekten aufnimmt, wobei die Rechenverarbeitungseinheit programmiert ist, um das Verfahren nach einem der vorhergehenden Ansprüche umzusetzen.

## Claims

1. Method of object identification carried out by means of a computerised processing unit which is connected to a capture member and to a memory holding characteristics of objects which are stored in association with identifiers of objects, the method comprising a phase of capturing a series of successive images of an object and a final identification phase which is launched at the end of said capturing phase, the method comprising at least one step of selecting at least one image representing the object during the capture of the series of images, the final identification phase comprising the step of extracting characteristics of the object from the image selected and the step of comparing the characteristics extracted with the characteristics stored, the object being identified when the characteristics extracted and the characteristics stored in association with one of the identifiers correspond to one another to a first predetermined degree of correspondence, **characterised in that** the method comprises an intermediate identification phase which begins after the reception by the processing unit (1) of the first image captured by the capture member (2) and continues simultaneously with the capturing phase (100), this intermediate identification phase comprising: the step of extracting characteristics of the object from the image selected, and the step of comparing the characteristics extracted with the characteristics stored, the object being identified when the characteristics extracted and the characteristics which are stored in association with one of the identifiers correspond to one another to a second predetermined degree of correspondence which is more restrictive than first degree of correspondence, the final identification phase not then being carried out.

2. Method according to claim 1, wherein the capturing phase or the intermediate identification phase comprises the step of selecting the object in images, the selecting comprising an operation of tracking a form of presumed object from one image to another and an operation of comparing the form of presumed object found in each image with a reference form, the object being selected when the comparison is positive.

3. Method according to claim 2, wherein an object which is tracked from one image to another must be detected over a predetermined number of images in order to be selected for the intermediate identification.

4. Method according to any one of the preceding claims, wherein, if the intermediate identification fails a predetermined number of times in the case of an object which is tracked, the attempted intermediate identification of this object is abandoned.

5. Method according to any one of the preceding claims, wherein the characteristics stored are organised by the frequency with which the identifiers are validated by the process.

6. Method according to claim 1, wherein the object is a biometric element such as a fingerprint.

7. Method according to claim 1, wherein the object is a biometric element such as an iris of an eye.

8. Method according to claim 1, wherein the object is a biometric element such as a face.

9. Identification apparatus comprising a computerised processing unit which is connected to a capture member and to a memory holding characteristics of objects which are stored in association with identifiers of objects, the computerised processing unit being programmed to carry out the method according to any one of the preceding claims.
